# EUROPEAN PATENT SPECIFICATION

(11) **EP 2 354 562 B1**
(45) Date of publication and mention of the grant of the patent: **29.10.2014**
(21) Application number: 10193281.2
(22) Date of filing: 01.12.2010
(51) Int. Cl.: F15B 13/043

(54) **Proportional pressure controller**
Proportionaler Druckregler
Contrôleur de pression proportionnelle

(30) Priority: 27.01.2010 US 694703
(43) Date of publication of application: 10.08.2011
(73) Proprietor: MAC Valves, Inc., Wixom, Michigan 48393 (US)
(72) Inventor: Walsh, Timothy, Clarkston, MI 48346 (US); Williams, Kevin, Wixom, MI 48393 (US)
(74) Representative: Stuttard, Garry Philip

(56) References cited:
- DE-A1-102006 041 601
- US-A- 4 316 486

## Description

The present disclosure relates to proportional pressure controllers adapted for use in pneumatic systems.

This section provides background information related to the present disclosure which is not necessarily prior art.

Proportional pressure controllers often include main internal valves which are moved to permit a pressurized fluid to be discharged to an actuation device while controlling the operating pressure of the fluid at the actuation device. The main valves are commonly repositioned using solenoids operators. This configuration increases weight and expense of the controller, and requires significant electrical current to reposition the main valves.

Known proportional pressure controllers, as shown in US 4 316 486, are also often susceptible to system pressure undershoot or overshoot, wherein due to the mass and operating time of the main valves, the signal to reduce or stop pressurized fluid flow to the actuation device may occur too soon or too late to avoid either not reaching or exceeding the desired operating pressure. When this occurs, the control system operating the solenoid actuators begins a rapid opening and closing sequence as the controller "hunts" for the desired operating pressure. This rapid operation is known as "motor-boating" and further increases controller wear and cost of operation.

This section provides a general summary of the disclosure, and is not a comprehensive disclosure of its full scope or all of its features.

According to several embodiments, a proportional pressure controller includes: a controller assembly including a body having inlet, outlet, and exhaust ports; a fill valve is in communication with a pressurized fluid in the inlet port; a dump valve is in communication with the pressurized fluid in a discharge passage of the fill valve; and an inlet poppet valve and an exhaust poppet valve. An outlet flow passage is in communication with the pressurized fluid when the inlet poppet valve is moved to an inlet poppet valve open position. The outlet flow passage communicates with the outlet port and an exhaust/outlet common passage normally isolated from the exhaust port when the exhaust poppet valve is in an exhaust poppet valve closed position. A fill inlet passage provides fluid communication between the inlet passage and the fill valve, and is isolated from each of the outlet flow passage, the exhaust/outlet common passage, and the outlet and exhaust ports in all operating conditions of the controller. The fill inlet passage communicates with the inlet passage and being continuously pressurized by the pressurized fluid in the inlet passage. A pressure sensor is positioned in the discharge passage to isolate the pressure sensor from fluid in the outlet port.

According to additional embodiments, a proportional pressure controller includes a controller body including: inlet, outlet, and exhaust ports; an inlet passage and an outlet passage, the inlet passage communicating a flow of pressurized fluid from the inlet port to the outlet passage, and the outlet passage communicating the flow of pressurized fluid from the inlet passage to the outlet port; and a piston slidably disposed in the controller body. A receiving passage is isolated from any of the inlet and outlet passages and the inlet, outlet, and exhaust ports in each of an open, a closed, and an exhaust operating condition of the controller. The receiving passage fluidly connects to a chamber upstream of the piston and to an exhaust valve pressurization chamber. A slidably disposed inlet poppet valve is adapted to isolate the outlet passage from the inlet passage in an inlet poppet valve closed position. The inlet poppet valve is normally biased to the inlet poppet valve closed position. A slidably disposed exhaust poppet valve is normally held in an exhaust poppet valve closed position by the pressurized fluid in the exhaust valve pressurization chamber. The exhaust poppet valve adapted to isolate outlet passage from the exhaust port in the exhaust poppet valve closed position.

According to other embodiments, a proportional pressure controller includes a controller assembly having open, closed/pressure achieved, and exhaust controller positions. The controller assembly also includes: a body having inlet, outlet, and exhaust ports and an exhaust/outlet common passage; a fill valve in communication with a pressurized fluid in the inlet port; a dump valve in communication with the pressurized fluid in a discharge passage of the fill valve; and a piston slidably disposed in the body in communication with a piston pressurization chamber and moved in response to the pressurized fluid entering the piston pressurization chamber. An inlet poppet valve contacting the piston is slidably disposed in the body. The inlet poppet valve is normally biased to an inlet poppet valve closed position in the closed controller position. The inlet poppet valve is movable by displacement of the piston to an inlet poppet valve open position defining the open controller position. An exhaust poppet valve is slidably disposed in the body and held in an exhaust poppet valve closed position by the fluid pressure directed through the fill valve acting on an end face of the exhaust poppet valve. The fluid pressure creates a greater force than a force due to pressure in the exhaust/outlet common passage of the body acting on an opposite face of the exhaust poppet valve. The exhaust poppet valve isolates the pressurized fluid from the exhaust port when in the closed position.

According to further embodiments, a proportional pressure controller includes a controller assembly having open, closed/pressure achieved, and exhaust controller conditions. The controller assembly also includes: a body having inlet, outlet, and exhaust ports, and an exhaust/outlet common passage; and a valve system adapted to control flow of a pressurized fluid. An inlet poppet valve is slidably disposed in the body and normally biased to an inlet poppet valve closed position defining the controller closed condition. The inlet poppet valve is movable to an inlet poppet valve open position defining the controller open condition by the pressurized fluid directed through the valve system. An exhaust poppet valve is slidably disposed in the body and held in an exhaust poppet valve closed position by the fluid pressure directed through the valve system into an exhaust valve pressurization chamber. An outlet flow passage is in communication with the pressurized fluid from the inlet port when the inlet poppet valve is moved to the inlet poppet valve open position. The outlet flow passage communicates with the outlet port and the exhaust/outlet common passage is normally isolated from the exhaust port when the exhaust poppet valve is in the exhaust poppet valve closed position. A fill inlet passage provides fluid communication between the inlet passage and the valve system. The fill inlet passage is isolated from each of the outlet flow passage, the exhaust/outlet common passage, and the outlet and exhaust ports in all the operating conditions of the controller. The fill inlet passage communicates with and is continuously pressurized by the pressurized fluid in the inlet passage.

Further areas of applicability will become apparent from the description provided herein. The description and specific examples in this summary are intended for purposes of illustration only and are not intended to limit the scope of the present disclosure.

The drawings described herein are for illustrative purposes only of selected embodiments and not all possible implementations and are not intended to limit the scope of the present disclosure.
Figure 1 is a left front perspective view of a proportional pressure controller of the present disclosure;
Figure 2 is a side elevational view of the proportional pressure controller of Figure 1;
Figure 3 is a cross sectional front elevational view taken at section 3 of Figure 2;
Figure 4 is a cross sectional front elevational view similar to Figure 3 showing the proportional pressure controller inlet poppet valve in an open position;
Figure 5 is across sectional front elevational view similar to Figure 3 showing the proportional pressure controller exhaust poppet valve in a open position;
Figure 6 is a cross sectional front elevational view similar to Figure 3 of another embodiment of a proportional pressure controller of the present disclosure;
Figure 7 is a cross sectional front elevational view similar to Figure 3 of another embodiment of a proportional pressure controller of the present disclosure;
Figure 8 is a cross sectional front elevational view similar to Figure 3 of another embodiment of a proportional pressure controller of the present disclosure;
Figure 9 is a cross sectional front elevational view similar to Figure 3 of another embodiment of a proportional pressure controller of the present disclosure; and
Figure 10 is a diagrammatic representation of the proportional pressure controller of Figure 1.

Corresponding reference numerals indicate corresponding parts throughout the several views of the drawings.

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a", "an" and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps; operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on", "engaged to", "connected to" or "coupled to" another element or layer, it may be directly on, engaged, connected or coupled to the other element or layer, or intervening elements or layers may be present. In contrast, when an element is referred to as being "directly on," "directly engaged to", "directly connected to" or "directly coupled to" another element or layer, there may be no intervening elements or layers present. Other words used to describe the relationship between elements should be interpreted in a like fashion (e.g., "between" versus "directly between," "adjacent" versus "directly adjacent,'' etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath", "below", "lower", "above", "upper" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

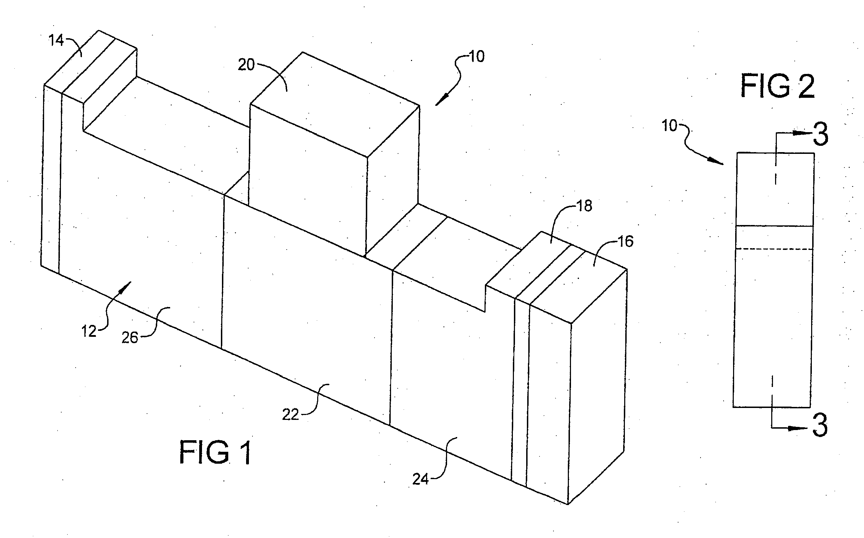

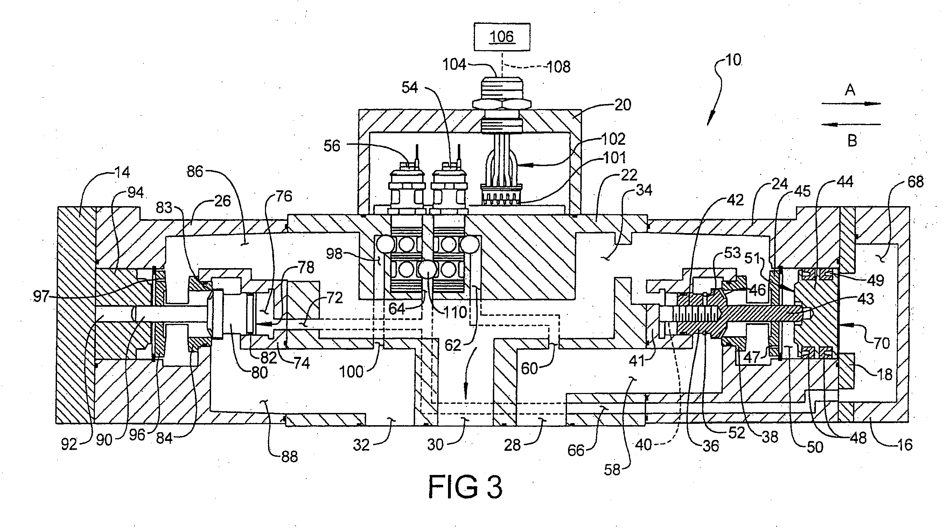

Referring to Figure 1, a proportional pressure controller 10 includes a body 12 having a first end cap 14 at a first end and a second end cap 16 at an opposite and. First and second end caps 14, 16 can be releasably fastened or fixedly connected to body 12. A spacer member 18 can also be included with body 12 whose purpose will be discussed in reference to Figure 3. A controller operator 20 can be connected such as by fastening or fixed connection to a central body portion 22. Body 12 can further include an inlet body portion 24 connected between central body portion 22 and spacer member 18, with spacer member 18 positioned between inlet body portion 24 and second end cap 16. Body 12 can further include an exhaust body portion 26 positioned between central body portion 22 and first end cap 14.

Referring to Figure 2, proportional pressure controller 10 can be provided in the form of a generally rectangular-shaped block body such that multiple ones of the proportional pressure controllers 10 can be arranged in a side-by-side configuration. This geometry also promotes use of the proportional pressure controller 10 in a manifold configuration.

Referring to Figure 3, according to several embodiments, the inlet and exhaust body portions 24, 26 are releasably and sealingly connected to the central body portion 22. Proportional pressure controller 10 can include each of an inlet port 28, an outlet port 30, and an exhaust port 32 each created in the central body portion 22. A pressurized fluid such as pressurized air can be discharged from proportional pressure controller 10 via outlet port 30 through an outlet flow passage 34. Flow to the outlet flow passage 34 can be isolated using an inlet poppet valve 36. Inlet poppet valve 36 is normally seated against an inlet valve seat 38 and held in the seated position shown with assist by the force of a biasing member 40 such as a compression spring, defining a controller closed condition wherein no fluid flow is discharged through either outlet or exhaust port 30, 32. The biasing member 40 can be held in position by contact with an end wall 41 of inlet body portion 24, and oppositely by being partially received in a valve cavity 42 of inlet poppet valve 36. Inlet poppet valve 36 can axially slide in each of an inlet valve closing direction "A" extending biasing member 40 and an opposite inlet valve opening direction "B" compressing biasing member 40.

Oppositely directed from valve cavity 42 is an inlet valve stem 43 integrally and axially extending from inlet poppet valve 36 and coaxially aligned with biasing member 40. A free end of inlet valve stem 43 contacts a piston 44. Inlet valve stem 43 is slidably disposed through a first boundary wall 45 before contacting piston 44 to help control an axial alignment of inlet poppet valve 36 to promote a perimeter seal of a poppet seat ring 46 with inlet valve seat 38 in the closed position. Pressurized fluid can free-flow through first boundary wall 45 via at least one hole 47 and/or through the bore that permits passage of inlet valve stem 43. A size and quantity of the at least one hole 47 controls the time required for pressure in outlet flow passage 34 to act on piston 44 (on the left side as viewed in Figure 3) and therefore the speed of piston movement. The pressure acting through the at least one hole 47 creates a pressure biasing force acting to move piston 44 toward the closed position. Piston 44 can be provided with at least one and according to several embodiments a plurality of resilient U-cup seals 48 which are individually received in individual seal grooves 49 created about a perimeter of piston 44. U-cup seals 48 provide a fluid pressure seal about piston 44 as piston 44 axially slides within a cylinder cavity 50.

Piston 44 moves coaxially with the inlet poppet valve 36 in inlet valve closing direction "A" or the inlet valve opening direction "B". First boundary wall 45 defines a first boundary (a non-pressure boundary) and piston 44 defines a second boundary (a pressure boundary) of a cylinder cavity 50 which slidingly receives piston 44. Piston 44 can move in the inlet valve opening direction "B" until an end 51 of piston 44 contacts first boundary wall 45 (at a right hand facing side of first boundary wall 45 as seen in Figure 3) with first boundary wall 45 being fixed in position. Piston 44 is retained within cylinder cavity 50 by contact with first boundary wall 45 by the previously described pressure biasing force created by pressurized fluid freely flowing through the holes 47. Piston 44 is also retained within cylinder cavity 50 by contact at an opposite end of cylinder cavity 50 with portions of spacer member 18 which extend radially past a cylindrical wall of cylinder cavity 50 as shown.

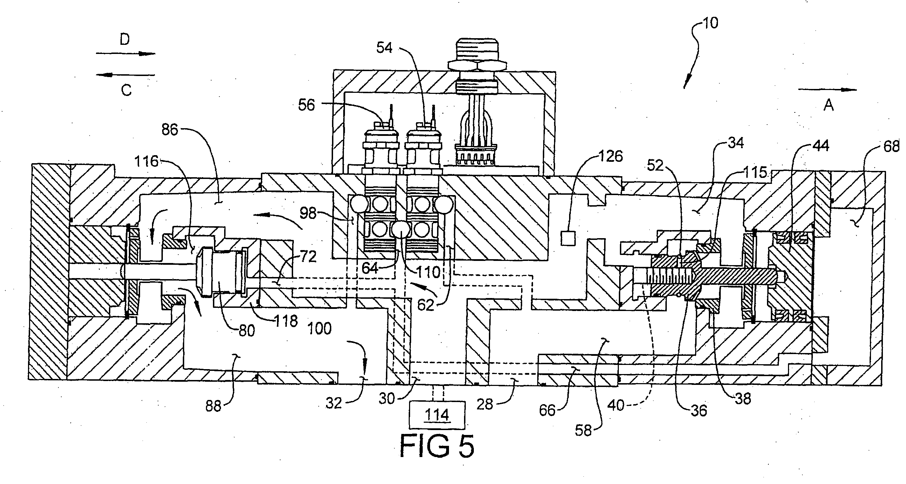

An elastic seal member 52 such as an O-ring can be positioned within a slot or circumferential groove 53 created externally about a perimeter of inlet poppet valve 36. Elastic seal member 52 provides a relief capacity for pressurized fluid in valve cavity 42 which will be further described in reference to Figure 5.

Proportional pressure controller 10 can be operated using each of an inlet or fill valve 54 and a dump valve 56 which can be releasably connected to central body portion 22 within controller operator 20. Pressurized fluid such as pressurized air received in inlet port 28 is commonly filtered or purified. Fluid that can back-flow into proportional pressure controller 10 via outlet port 30 and outlet flow passage 34 is potentially contaminated fluid. According to several embodiments, the fill and dump valves 54, 56 are isolated from the potentially contaminated fluid such that only the filtered air or fluid received via inlet port 28 flows through either fill valve 54 or dump valve 56. An inlet flow passage 58 communicates between inlet port 28 and outlet flow passage 34 and is isolated from outlet flow passage 34 by inlet poppet valve 36 which can be normally closed. An air supply port 60 communicates with inlet flow passage 58 and via a fill inlet passage 62 which is isolated from outlet flow passage 34, provides pressurized fluid or air to fill valve 54. A valve discharge passage 64 provides a path for air flowing through fill valve 54 to be directed to an inlet of dump valve 56 and a plurality of different passages.

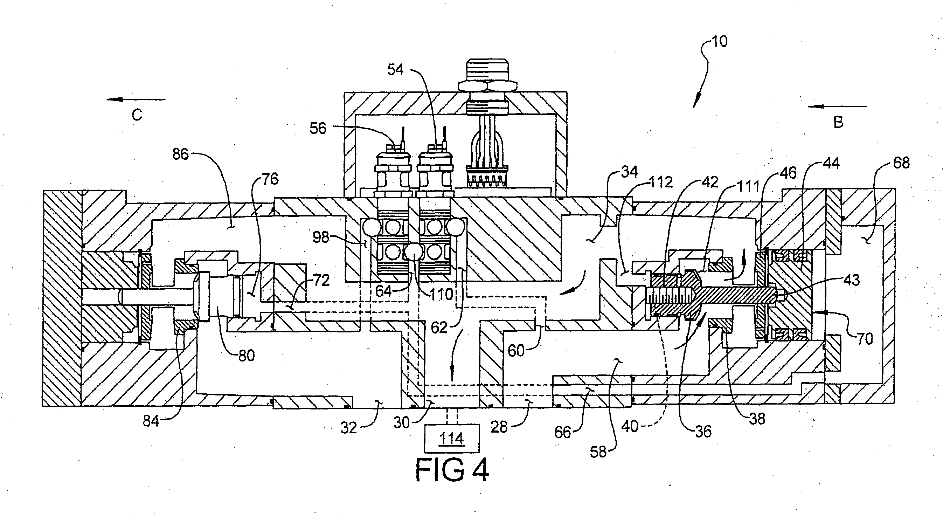

One of these passages includes a piston pressurization passage 66 which directs air or fluid from valve discharge passage 64 to a piston pressurization chamber 68 created in second end cap 16. Pressurized air or fluid in piston pressurization chamber 68 generates a force acting on a piston end face 70 of piston 44. A surface area of piston end face 70 is larger than a surface area of inlet poppet valve 36 in contact with inlet valve seat 38, therefore, when fill valve 54 opens or continues to open further, the net force created by the pressurized fluid acting on piston end face 70 causes piston 44 to initially move or move further in the inlet valve opening direction "B" and away from inlet valve seat 38. This initially opens or allows a further increased flow in a flow passage between inlet flow passage 58 and outlet flow passage 34 to allow pressurized fluid to exit proportional pressure controller 10 at outlet port 30, defining a controller open condition wherein fluid from inlet flow passage 58 is discharged through outlet port 30 (with no flow through exhaust port 32). This operation will be more fully explained in reference to Figure 4. Proportional pressure controller 10 can initiate flow of pressurized fluid between inlet port 28 and outlet port 30 if no flow is present at outlet port 30, or proportional pressure controller 10 can maintain, increase, or decrease the pressure of an existing flow of the pressurized fluid between inlet port 28 and outlet port 30 in those situations where a continuous regulated flow of pressurized fluid is required.

A portion of the pressurized fluid discharged through fill valve 54 through valve discharge passage 64 is directed via an exhaust valve pressurization passage 72 created in a connecting wall 74 of central body portion 22 into an exhaust valve pressurization chamber 76. When fill valve 54 is open and dump valve 56 is closed the pressurized air or fluid received in exhaust valve pressurization chamber 76 via exhaust valve pressurization passage 72 acts against an exhaust valve end face 78 of an exhaust poppet valve 80 to retain exhaust poppet valve 80 in a seated position shown.

Exhaust poppet valve 80 includes an exhaust poppet valve seat ring 83 which contacts an exhaust valve seat 84 in the seated position of exhaust poppet valve 80. When exhaust poppet valve 80 is in the seated position shown in Figure 3, pressurized fluid flowing from outlet flow passage 34 through outlet port 30 which also enters an exhaust/outlet common passage 86 is isolated from exhaust port 32 to prevent pressurized flow out of exhaust port 32 through an exhaust flow passage 88.

Exhaust poppet valve 80 includes an integrally connected, axially extending exhaust valve stem 90 which is slidingly received in a stem receiving passage 92 of a stem receiving member 94. Stem receiving member 94 is positioned between a second boundary wall 96 and the first end cap 14. Similar to first boundary wall 45, pressurized fluid can free-flow through second boundary wall 96 via at least one hole 97. A size and quantity of the hole(s) 97 controls the speed at which pressure balances across second boundary wall 96. A dump valve passage 98 is provided at a discharge side of dump valve 56 which communicates via a dump valve exhaust port 100 of central body portion 22 with exhaust flow passage 88. It is noted that dump valve outlet passage 98 is isolated from and therefore does not provide fluid communication with exhaust valve pressurization passage 72, valve discharge passage 64, or piston pressurization passage 66.

It is further noted that each of the valve discharge passage 64, piston pressurization passage 66, exhaust valve pressurization passage 72, and dump valve passage 98 are isolated from fluid pressure in outlet flow passage 34 or exhaust/outlet common passage 86 when fill valve 54 is open. These flow passages therefore allow communication of the filtered air or fluid from inlet port 28 to be communicated through either fill or dump valve 54, 56 without exposing the fill or dump valves 54, 56 to potentially contaminated fluid in outlet port 30.

Proportional pressure controller 10 can further include a circuit board 101 positioned within controller operator 20 which is in electrical communication with both fill and dump valves 54, 56. Signals received at circuit board 101 for positioning control of either fill or dump valve 54, 56 are received via a wiring harness 102 in controller operator 20 which is sealed using a connecting plug 104. A remotely positioned control system 106 performs calculation functions and forwards command signals to circuit board 101 which controls either/both fill and/or dump valves 54, 56 to control a system pressure at outlet port 30. Control signals from and to proportional pressure controller 10 and control system 106 are communicated using a control signal interface 108. Control signal interface 108 can be a hard wire (e.g.: wiring harness) connection, a wireless (e.g.: radio frequency or infra red) connection, or the like. The controller closed condition shown in Figure 3 for proportional pressure controller 10 is provided when both fill and dump valves 54, 56 are closed having inlet poppet valve 36 seated against inlet valve seat 38, and exhaust poppet valve 80 seated against exhaust valve seat 84.

The configuration shown in Figure 3 is not limiting. For example, although the inlet poppet valve 36 and exhaust valve poppet valve 80 are shown in an opposed configuration, these poppet valves can be arranged in any configuration at the discretion of the manufacturer. Alternate configurations can provide the poppet valves in a side-by-side parallel disposition. The poppet valves can also be oriented such that both poppet valves seat in a same axial direction and unseat in the same opposed axial direction. The configuration shown in Figure 3 is therefore exemplary of one possible configuration. The configuration shown in Figure 3 indicates either a closed configuration, with no inlet pressure in communication with outlet port 30, or a pressure achieved condition which occurs when a desired pressure at outlet port 30 is reached but further flow is at least temporarily not required through outlet port 30. Figure 4 can also depict the pressure achieved condition, occurring when a steady state flow of fluid at a desired pressure is achieved through outlet port 30. The pressure achieved condition can occur at any position of inlet poppet valve 36 with respect to inlet valve seat 38 between and including a seated and a fully open position.

Referring to Figure 4, the controller open condition or pressurizing configuration of proportional pressure controller 10 is shown. In the open condition, a signal is received to open fill valve 54, with dump valve 56 being retained in a closed position. When fill valve 54 opens, a portion of the air or fluid in inlet port 28 flows through fill valve 54 via the pilot air supply port 60 and the fill inlet passage 62. This airflow exits fill valve 54 into value discharge passage 64. The pressure of the fluid in valve discharge passage 64 is sensed by a pressure sensor such as a first pressure signaling device 110, which according to several embodiments can be a pressure transducer. The pressurized fluid in valve discharge passage 64 is directed in part through piston pressurization passage 66 into piston pressurization chamber 68 to force piston 44 to slide in the inlet valve opening direction "B" which acts against inlet valve stem 43 to push inlet poppet valve 36 away from inlet valve seat 38, compressing biasing member 40. This opening motion of.inlet poppet valve 36 creates an inlet flow ring 111 allowing pressurized fluid in inlet flow passage 58 to flow via inlet flow ring 111 into outlet flow passage 34 and from there as shown by the various flow arrows out of proportional pressure controller 10 through outlet port 30. A first orifice 112 can be provided to permit fluid on the valve cavity 42 side of inlet poppet valve 36 to displace into the outlet flow passage 34 at a controlled rate permitting the sliding speed and therefore the opening timing of inlet poppet valve 36 to be predetermined. Pressurized fluid which exits outlet port 30 can be directed to a pressure actuated device 114 such as a piston operator or similar actuating device. First orifice 112 also allows pressure that is in outlet flow passage 34 to act on the spring side of poppet valve 36 creating additional biasing force toward the closed position.

First boundary wall 45 can also function as a contact surface stopping the sliding motion of piston 44 in the inlet valve opening direction "B". A length of time that inlet poppet valve 36 is in the open position can be used together with the pressure sensed by first pressure signaling device 110 to proportionally control the pressure at pressure actuating device 114. Because first pressure signaling device 110 is also positioned within valve discharge passage 64, first pressure signaling device 110 is also isolated form potential contaminants that may be present in outlet port 30. This reduces the possibility of contaminants affecting the pressure signal of first pressure signaling device 110. As previously noted, when pressurized fluid is being discharged through outlet port 30 and when fill valve 54 is in the open position, pressurized fluid from valve discharge passage 64 is received via exhaust valve pressurization passage 72 in exhaust valve pressurization chamber 76 to retain the exhaust poppet valve 80 in its seated position by forcing the exhaust poppet valve 80 in the exhaust valve closing direction "C".

Referring to Figure 5, when a desired pressure is reached at pressure actuated device 114 as sensed by first pressure signaling device 110, fill valve 54 is directed to close and dump valve 56 can be directed to open. Dump valve 56 will also open if the pressure reaches a predetermined (high) pressure or the command signal is given to lower the pressure. When fill valve 54 is in the closed position, pressurized fluid in the fill inlet passage 62 is isolated from the valve discharge passage 64. When dump valve 56 opens, exhaust valve pressurization passage 72 vents to exhaust flow passage 88 via valve discharge passage 64 and dump valve outlet passage 98. The residual fluid pressure at outlet port 30 and exhaust/outlet common passage 86 therefore exceeds the pressure in exhaust valve pressurization passage 72, forcing exhaust poppet valve 80 to translate in the exhaust valve opening direction "D". At this same time, pressurized air or fluid in piston pressurization passage 66 also vents to exhaust flow passage 88 via valve discharge passage 64 and dump valve outlet passage 98. This un-balances the forces acting on inlet poppet valve 36 from piston 44 such that the biasing force of biasing member 40 plus the fluid pressure in outlet flow passage 34 combine to return inlet poppet valve 36 in the inlet valve closing direction "A" to seat inlet poppet valve 36 against inlet valve seat 38. The at least one hole 47 provided through first boundary wall 45 permits fluid pressure equalization across first boundary wall 45 increasing the sliding speed of piston 44 when inlet poppet valve 36 closes. Inlet poppet valve 36 can also be in the closed condition if the desired pressure at outlet port 30 is reached and is static.

As exhaust poppet valve 80 moves in the exhaust valve opening direction "D", an exhaust flow ring 116 opens to allow flow in the direction of the multiple flow arrows shown from exhaust/outlet common passage 86 through exhaust flow ring 116, into exhaust flow passage 88, and exiting via exhaust port 32. The signal to open dump valve 56 is also received when the pressure at pressure actuated device 114 exceeds the desired pressure setting. When the desired pressured setting is exceeded, it is advantageous to exhaust the higher fluid pressure via the exhaust port 32 as rapidly as possible: Pressured balanced exhaust poppet valve 80 is therefore opened which allows rapid depressurization via exhaust/outlet common passage 86, exhaust flow ring 116, exhaust flow passage 88, and exhaust port 32. With dump valve 56 open, the dump valve outlet passage 98, depressurizing valve discharge passage 64, piston pressurization passage 66, piston pressurization chamber 68, and exhaust valve pressurization passage 72 also depressurize via exhaust port 32.

Referring to both Figures 5 and 3, when dump valve 56 receives a signal to close as the pressure at valve discharge passage 64 sensed by first pressure signaling device 110 reaches the desired pressure, the exhaust poppet valve 80 will remain in the open position until pressure at valve pressurization chamber 76 exceeds pressure in exhaust/outlet common passage 86. Fluid pressure in exhaust valve pressurization passage 72 forces exhaust poppet valve 80 in the exhaust valve closed direction "C" against exhaust valve seat 84 until pressure in exhaust/outlet common passage 86 exceeds the pressure at valve pressurization chamber 76.

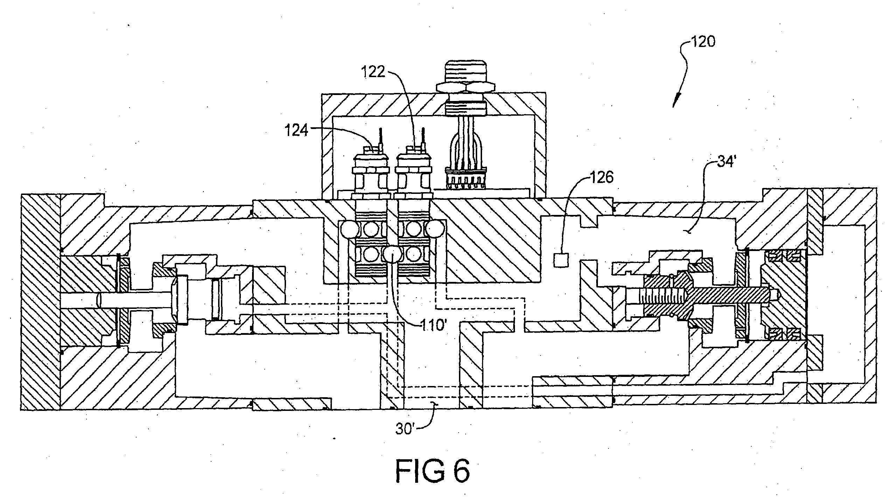

Referring to Figure 6, according to further embodiments a proportional pressure controller 120 is modified from proportional pressure controller 10 to provide a different type of fill valve 122 and dump valve 124. For example, fill valve 122 and dump valve 124 can be hydraulically operated, solenoid operated, or air operated valves which can provide different operating characteristics for proportional pressure controller 120. Proportional pressure controller 120 can further include a second pressure sensor such as a second pressure signaling device 126 such as a pressure transducer positioned in outlet flow passage 34'. The addition of second pressure signaling device 126 can provide an additional/heightened sensitivity pressure detection signal at outlet port 30'. Using the output or pressure signals received from both first pressure signaling device 110 and second pressure signaling device 126 can provide for finer position and/or open/close timing control of the valve members of proportional pressure controller 120 to mitigate either failing to reach or exceeding the desired pressure at outlet port 30'. The remaining components of proportional pressure controller 120 are substantially the same as those described with reference to proportional pressure controller 10 of Figure 3. Failing to achieve the desired pressure at the outlet port of known proportional pressure control devices can result in rapid opening/closing operation of the control valves, known as "motor boating", as the controller attempts to correct to the desired pressure by moving solenoid operated valves in response to a pressure signal. The use of first and second pressure signaling devices 110', 126 can provide a differential pressure between the inlet pressure sensed by first pressure signaling device 110', and the pressure at outlet port 30' which is sensed by second pressure signaling device 126, which together provide a real time difference between the desired outlet pressure and the pilot pressure. Together with the fast acting poppet valves (which respond to pressure differences and do not require a control signal) proportional pressure controller 120 can help mitigate the chance of motor boating.

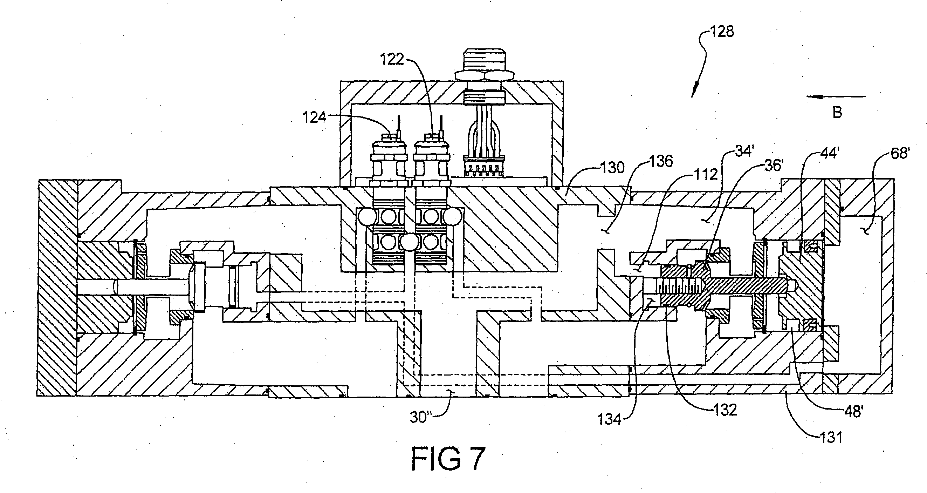

Referring to Figure 7 and again to Figure 3, according to other embodiments a proportional pressure controller 128 can include a central body portion 130 which is modified from central body portion 22, and can include an inlet body portion 131 which is modified from the inlet body portion 24 shown in Figure 3. Inlet poppet valve 36' is provided with a U-cup seal member 132 and is slidably disposed in an inlet poppet valve pressure chamber 134. Pressurized fluid which exits inlet poppet valve pressure chamber 134 as inlet poppet valve 36' moves in inlet valve opening direction "B" is discharged via a fist orifice 112' which can be modified at the discretion of the manufacturer to change the flow characteristics of the fluid exiting from inlet poppet valve pressure chamber 134 thereby affecting the operating speed of inlet poppet valve 36'. An outlet flow passage orifice 136 created in central body portion 130 can further be used to control the fluid flow rate from outlet flow passage 34' to outlet port 30". The combination of first orifice 112' and outlet flow passage orifice 136 can be used to increase or decrease the flow rate of pressurized fluid via outlet port 30". Also, by selecting the type of valve used for fill valve 122 and dump valve 124 in proportional pressure controller 128, a valve type that is less susceptible to operating problems from the contaminates present in outlet port 30" can reduce the need for a second U-cup seal in piston 44' such that only single U-cup seal 48' can be used. This can further reduce friction associated with the sliding motion of piston 44' to further enhance the operating speed of inlet poppet valve 36'.

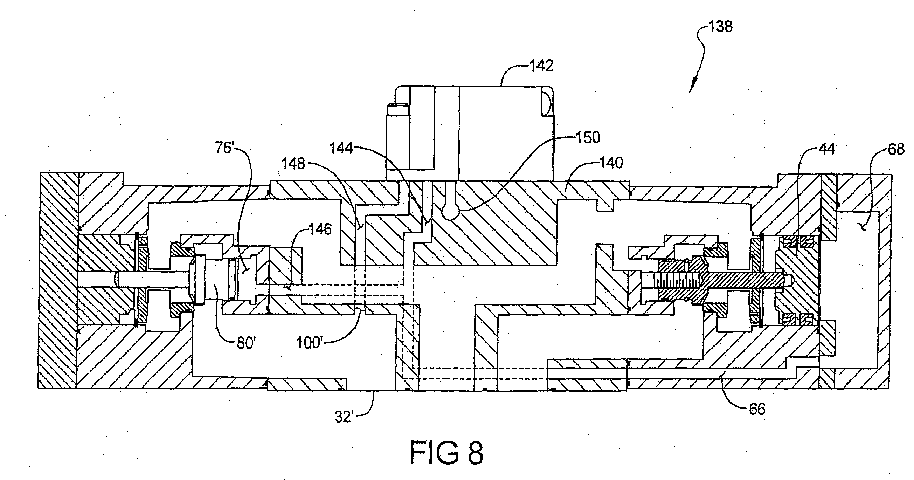

Referring to Figure 8 and again to Figure 3, according to still further embodiments a proportional pressure controller 138 can include a central body portion 140 modified with respect to the central body portion. Proportional pressure controller 138 can include a 3-way valve 142 used in place of the fill and dump valves of the previous embodiments. A pilot air outlet passage 144 communicating through 3-way valve 142 can similarly direct pressurized fluid via piston pressurization passage 66' to piston pressurization chamber 68 and piston 44. Pressurized fluid from pilot air outlet passage 144 can also be directed via an exhaust valve pressurization passage 146 into exhaust valve pressurization chamber 76' to fully seat exhaust poppet valve 80'. A separate dump pressure passage 148 communicating with 3-way valve 142 can also vent pressurized fluid via dump valve exhaust port 100' to exhaust port 32'. A pilot air or fluid inlet passage 150 can be created in central body portion 140 to eliminate the need for a separate internal passage providing pilot air to 3-way valve 142. Operation of proportional pressure controller 138 is otherwise similar to the previously described proportional pressure controllers herein.

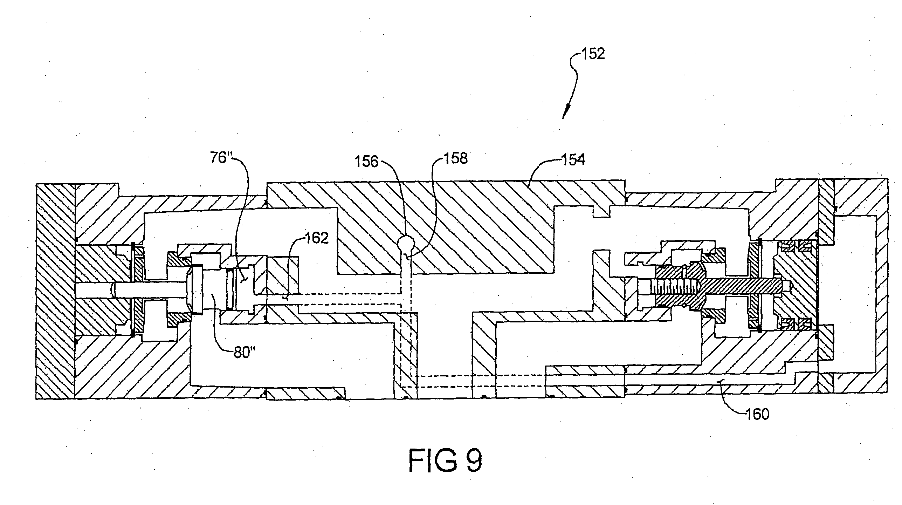

Referring to Figure 9 and again to Figures 3 and 6-8, operating valves such as the fill and dump valves or 3-way valves previously described for the other embodiments of proportional pressure controllers of the present disclosure can be eliminated by the design shown for a proportional pressure controller 152. Proportional pressure controller 152 includes a central body portion 154 also modified from the central body portion 22 shown and described in reference to Figure 3 to include only a pilot air receiving passage 156 which communicates via a pilot air outlet passage 158 to both a piston pressurization passage 160 and an exhaust poppet pressurization passage 162. Proportional pressure controller 152 eliminates all controller mounted actuating valves and retains only the poppet valves of the previously discussed designs. This permits the space envelope of proportional pressure controller 152 to be minimized and provides for complete remote control of proportional pressure controller 152.

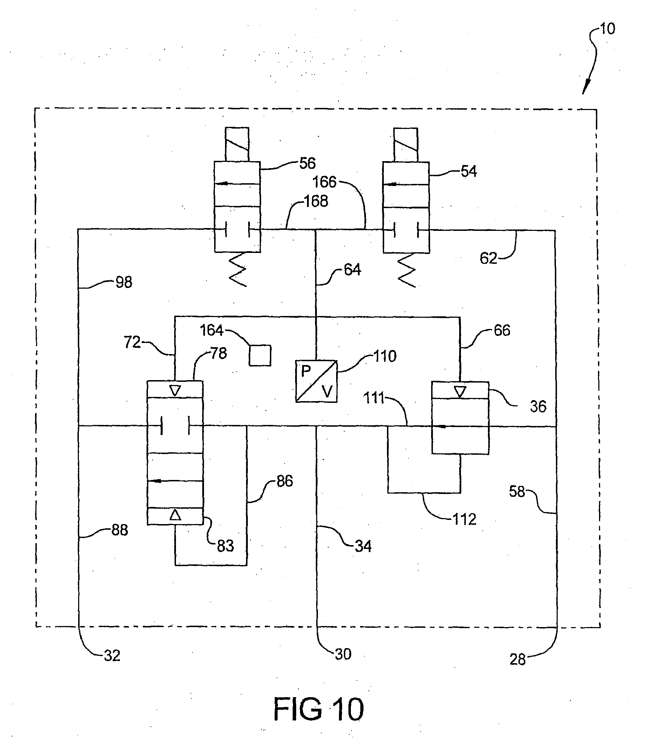

Referring to Figure 10, proportional pressure controller 10 can provide the first pressure signaling device 110 within the valve discharge outlet passage 64 to isolate the first pressure signaling device 110 from contaminated fluid in the outlet flow passage 34, which helps mitigate against contamination effecting the pressure signal 164 or the timing of generation of the pressure signal 164. A signal to open fill valve 54 provides flow of pressurized fluid in fill inlet passage 62 to the inlet poppet valve 36 via piston pressurization passage 66, and also provides flow of pressurized fluid to exhaust valve end face 78 of exhaust poppet valve 80 via exhaust valve pressurization passage 72. Pressurized fluid discharged from fill valve 56 immediately discharges through a fill valve discharge port 166 which communicates with both valve discharge outlet passage 64 and a dump valve inlet port 168. Pressurized fluid at dump valve inlet port 168 can be blocked by the dump valve 56 from entering dump valve outlet passage 98 and discharging via exhaust port 32 unless dump valve 56 is closed.

Proportional pressure controllers of the present disclosure offer several advantages. By eliminating solenoid actuators associated with the main flow valves of the controller and replacing the valves with poppet valves, small and lower energy consumption pilot valves in the form of fill and dump valves are used to provide pressure actuation to open or close the poppet valves. This reduces the cost and operating power required for the controller. The use of passageways created in the body of the controller to transfer pressurized fluid to actuate the poppet valves which are isolated from the main poppet valve flow paths prevents potentially contaminated fluid at the outlet of the controller from back-flowing into the pilot valves, which could inhibit their operation. One of the passageways can be used to simultaneously provide pressure to open one of the poppet valves while holding the second poppet valve in a closed position. By positioning a pressure sensing device in one of the isolated passageways, the pressure sensing device is also isolated from contaminants to improve the accuracy of the device's pressure signal. Also, the fill and dump valves can be provided in multiple valve forms, including solenoid actuated valves, hydraulically actuated valves, and a 3-way valve replacing both the fill and dump valves.

The foregoing description of the embodiments has been provided for purposes of illustration and description. It is not intended to be exhaustive or to limit the invention. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the invention, and all such modifications are intended to be included within the scope of the invention.

## Claims

1. A proportional pressure controller (10) comprising:
a controller assembly including:
a body having inlet (28), outlet (30) and exhaust ports (32);
a fill valve (54) in communication with a pressurized fluid in the inlet port;
a dump valve (56) in communication with the pressurized fluid in a discharge passage of the fill valve;
an inlet poppet valve (36) and an exhaust poppet valve (80);
an outlet flow passage (34) in communication with the pressurized fluid when the inlet poppet valve (36) is moved to an inlet poppet valve open position, the outlet flow passage (34) communicating with the outlet port (30) and an exhaust/outlet common passage (86) normally isolated from the exhaust port when the exhaust poppet valve is in an exhaust poppet valve closed position; and
a fill inlet passage (62) providing fluid communication between an inlet flow passage (58) and the fill valve (54), and isolated from each of the outlet flow passage (34), the exhaust/outlet common passage (86), and the outlet and exhaust ports in all operating conditions of the controller, the fill inlet passage (62) communicating with the inlet passage (58) and being continuously pressurized by the pressurized fluid in the inlet passage; and **characterised in that** it includes a first pressure signaling device (110) adapted to output a sensed pressure signal positioned in the discharge passage downstream of the fill valve (54) to isolate the pressure signaling device from fluid in the outlet port.

2. A proportional pressure controller (10) as claimed in Claim 1, further including:
a piston (44) in fluid communication with the fill valve (54) and adapted to move the inlet poppet valve (36) from a closed to the inlet poppet valve open position;
a chamber (68) upstream of the piston; and
a valve discharge passage (64) in communication with the pressurized fluid from the fill valve (54) providing the pressurized fluid to each of the chamber valve (80) pressurization chamber (76), the valve discharge passage (64) is isolated from each of the outlet flow passage (34), the exhaust/outlet common passage (86), and the outlet port (30) in all operating conditions of the controller.

3. A proportional pressure controller (10) as claimed in Claim 1 or 2, wherein the inlet poppet valve (36) is slidably disposed in the body and is normally biased to an inlet poppet valve closed position defining a controller closed condition, the inlet poppet valve (36) movable to the inlet poppet valve (36) open position by the pressurized fluid directed through the fill valve (54) resulting from the fill valve opening, defining a controller open condition; and wherein the exhaust poppet valve (80) is slidably disposed in the body and is held in the exhaust poppet valve (80) closed position by the fluid pressure directed through the fill valve (54), the exhaust poppet valve (80) isolating the pressurized fluid from the exhaust port (32).

4. A proportional pressure controller (10) as claimed in any preceding claim, wherein when the fill valve (54) is closed and the dump valve (56) is open, a dump valve outlet passage (98) in fluid communication with the exhaust port (32) permits the valve discharge passage (64) to depressurize via the exhaust port and permits the exhaust valve (80) to open venting the outlet flow passage (34) and the exhaust/outlet common passage (86) via the exhaust port.

5. A proportional pressure controller (10) as claimed in Claim 1 further including:
a piston (44) slidably disposed in the body;
a receiving passage (92) isolated from any of the inlet and outlet flow passages and the inlet (28), outlet (30), and exhaust (32) ports in each of an open, a closed, and an exhaust operating condition of the controller, the receiving passage (92) fluidly connecting to a chamber upstream of the piston and to an exhaust valve pressurization chamber (76);
the inlet poppet valve (36) adapted to isolate the outlet flow passage (34) from the inlet flow passage (58) in an inlet poppet valve closed position, the inlet poppet valve (36) normally biased to the inlet poppet valve closed position; and
the exhaust poppet valve (80) normally held in an exhaust poppet valve closed position by the pressurized fluid in the exhaust valve pressurization chamber (76), the exhaust poppet valve (80) adapted to isolate the outlet flow passage from the exhaust port (32) in the exhaust poppet valve closed position.

6. A proportional pressure controller (10) as claimed in Claim 5, further including a boundary wall (45) positioned between the piston (44) and the inlet poppet valve (36) having at least one aperture (47) permitting fluid flow through the boundary wall (45).

7. A proportional pressure controller (10) as claimed in Claim 5 or 6, wherein the inlet poppet valve (36) includes:
a valve cavity (50) receiving a biasing member (40) operating to normally bias the inlet poppet valve (36) in an inlet valve closed direction, and
a seat ring (46) adapted to sealingly contact a valve seat.

8. A proportional pressure controller (10) as claimed in any of Claims 5 to 7, wherein the inlet poppet valve is movable to the inlet poppet valve open position when the pressurized fluid is directed through the receiving passage (66) to the piston chamber (68), the pressurized fluid acting on a piston surface area (70) which is larger than an inlet poppet valve (36) surface area creating a force operating to move the piston (44) which pushes the inlet poppet valve (36) to the inlet poppet valve open position.

9. A proportional pressure controller (10) as claimed in any of Claims 5 to 8, wherein the inlet poppet valve (36) includes a stem (43) extending axially from the inlet poppet valve (36) adapted to contact the piston (44), wherein pressurization of the piston chamber induces motion of the piston contacting the stem (43) to induce sliding motion of the inlet poppet valve (36) to the inlet poppet valve open position.

10. A proportional pressure controller (10) as claimed in Claim 1, wherein the inlet poppet valve (36) is slidably disposed in a pressure chamber, the pressure chamber in fluid communication with the outlet flow passage (34) via an orifice (112) sized to control an operating speed of the inlet poppet valve.

11. A proportional pressure controller (10) as claimed in Claim 2, wherein:
the controller includes inlet (24), exhaust (26), and central body (22) portions, the inlet and exhaust body portions being releasably and sealingly connected to the central body portion;
the inlet, outlet, and exhaust ports are created in the central body portion;
the central body portion receives the inlet valve (36) and the exhaust valve (80);
the inlet poppet valve (36) and the piston (44) are slidably disposed in the inlet body portion (24) and
the exhaust poppet valve (80) is slidably disposed in the exhaust body portion (26).

12. A proportional pressure controller (10) as claimed in Claim 2, wherein the fill valve (54) in communication with the fill inlet passage (62) operates to isolate the pressurized fluid from the inlet (36) and exhaust poppet valves (80) when the fill valve is in a closed position, and when opened permits flow of the pressurized fluid to act upon an end face of the piston and an exhaust valve end face.

13. A proportional pressure controller (10) as claimed in Claim 12, wherein:
the dump valve (56) when opened decreases a pressure of the pressurized fluid acting upon the piston end face (70) and the exhaust valve end face (78); and
the dump valve (56) and the fill valve (54) each comprise a solenoid actuated valve.

14. A proportional pressure controller (10) as claimed in any preceding claim, further including:
a control system adapted to receive the sensed pressure signal from the first pressure signaling device (110) and control the fill (54) and dump (56) valves; and
a second pressure signaling device (126) positioned in an outlet flow passage (34) from the outlet port (30) adapted to output a second sensed pressure signal received by the control system to refine control of the fill (54) and dump (56) valves.

15. A proportional pressure controller (10) as claimed in any preceding claim, wherein the fill (54) and dump (56) valves are air operated fill and dump valves, having the fill valve in communication with the fill valve inlet passage (62).

## Patentansprüche

1. Proportionaldrucksteuergerät (10), das umfasst:
eine Steuergerätanordnung, die beinhaltet:
ein Gehäuse mit einem Einlassanschluss (28), einem Auslassanschluss (30) und einem Abgasanschluss (32);
ein Befüllungsventil (54), das in Verbindung mit einem mit Druck beaufschlagten Fluid in dem Einlassanschluss steht;
ein Gleitschutzventil (56), welches in Verbindung mit dem mit Druck beaufschlagten Fluid in einem Entladungsdurchlass des Befüllungsventils steht;
ein Einlasssitzventil (36) und ein Abgassitzventil (80);
einen Auslassflussdurchlass (34), der mit dem mit Druck beaufschlagten Fluid in Verbindung steht, wenn das Einlasssitzventil (36) in eine geöffnete Position des Einlasssitzventils bewegt ist, wobei der Auslassflussdurchlass (34) mit dem Auslassanschluss (30) in Verbindung steht und ein Abgas-/Auslassgesamtdurchlass (86) normal isoliert von dem Abgasanschluss ist, wenn das Abgassitzventil in einer geschlossenen Position des Abgassitzventils ist; und
ein Befüllungseinlassdurchlass (62), der Fluidverbindung zwischen einem Einlassflussdurchlass (58) und dem Befüllungsventil (54) bereitstellt, und von jedem von dem Auslassflussdurchlass (34), dem Abgas-/Auslassgesamtdurchlass (86) und dem Auslassanschluss und dem Abgasanschluss in allen Betriebsbedingungen des Steuergeräts isoliert ist, wobei der Befüllungseinlassdurchlass (62) mit dem Einlassdurchlass (5) kommuniziert und kontinuierlich durch das mit Druck beaufschlagte Fluid in dem Einlassdurchlass mit Druck beaufschlagt ist; und **dadurch gekennzeichnet, dass** es eine erste Drucksignalgebervorrichtung (110) beinhaltet, die eingerichtet ist, um ein sensiertes Drucksignal auszugeben, die in dem Entladungsdurchlass stromabwärts von dem Befüllungsventil (54) positioniert ist, um die Drucksignalgebervorrichtung von Fluid in dem Auslassanschluss zu isolieren.

2. Proportionaldrucksteuergerät (10), wie es in Anspruch 1 beansprucht ist, das weiterhin beinhaltet:
einen Kolben (44), der in Fluidverbindung mit dem Befüllungsventil (54) steht und eingerichtet ist, um das Einlasssitzventil (36) von einer geschlossenen in die offene Position des Einlasssitzventils zu bewegen;
eine Kammer (68), die sich stromaufwärts von dem Kolben befindet; und
einen Ventilentladungsdurchlass (64), der in Verbindung mit dem mit Druck beaufschlagten Fluid von dem Befüllungsventil (54) steht, dass das mit Druck beaufschlagte Fluid jeder von der Kammer, dem Ventil (80), der Druckkammer (76) bereitstellt, wobei der Ventilentladungsdurchlass (64) von jedem von dem Auslassflussdurchlass (34), dem Abgas-/Auslassgesamtdurchlass (86) und dem Auslassanschluss (30) in allen Betriebsbedingungen des Steuergeräts isoliert ist.

3. Proportionaldrucksteuergerät (10), wie es in Anspruch 1 oder 2 beansprucht ist, wobei das Einlasssitzventil (36) in dem Gehäuse verrutschbar angeordnet ist und normal vorgespannt in einer geschlossenen Position des Einlasssitzventils ist, was eine geschlossene Bedingung des Steuergeräts definiert, wobei das Einlasssitzventil (36) in die geöffnete Position des Einlasssitzventils (36) durch das mit Druck beaufschlagte Fluid, das durch das Befüllungsventil (54) aufgrund des Öffnens des Befüllungsventils geleitet wird, bewegt werden kann, was eine geöffnete Bedingung des Steuergeräts definiert; und wobei das Abgassitzventil (80) in dem Gehäuse verrutschbar angeordnet ist und in der geschlossenen Position des Abgassitzventils (80) durch den Fluiddruck, der durch das Befüllungsventil (54) gerichtet ist, gehalten wird, wobei das Abgassitzventil (80) das mit Druck beaufschlagte Fluid von dem Abgasanschluss (32) isoliert.

4. Proportionaldrucksteuergerät (10), wie es in einem der voranstehenden Ansprüche beansprucht ist, wobei, wenn das Befüllungsventil (54) geschlossen ist und das Gleitschutzventil (56) geöffnet ist, ein Gleitschutzventilauslassdurchlass (98), der in Fluidverbindung mit dem Abgasanschluss (32) steht, es dem Ventilentladedurchlass (64) ermöglicht, Druck über den Abgasanschluss abzubauen, und es dem Abgasventil (80) ermöglicht, sich zu öffnen, was den Auslassflussdurchlass (34) und den Abgas-/Auslassgesamtdurchlass (86) über den Abgasanschluss lüftet.

5. Proportionaldrucksteuergerät (10), wie es in Anspruch 1 beansprucht ist, welches weiterhin beinhaltet:
einen Kolben (44), der in dem Gehäuse verrutschbar angeordnet ist; einen Aufnahmedurchlass (92), der von jedem von dem Einlass- und Auslassflussdurchlass und den Einlass-(28), Auslass- (30) und Abgas(32)-Anschlüssen in jeder von einer geöffneten, einer geschlossenen und einer Abgasbetriebsbedingung des Steuergeräts isoliert ist, wobei der Aufnahmedurchlass (92) mit einer Kammer, die sich stromaufwärts von dem Kolben befindet, und mit einer Abgasventildruckkammer (76) fluidverbunden ist;
wobei das Einlasssitzventil (36) eingerichtet ist, um den Auslassflussdurchlass (34) von dem Einlassflussdurchlass (58) in einer geschlossenen Position des Einlasssitzventils zu isolieren, wobei das Einlasssitzventil (36) normal vorgespannt in die geschlossene Position des Einlasssitzventils ist; und
wobei das Abgassitzventil (80) normal in einer geschlossenen Position des Abgassitzventils durch das mit Druck beaufschlagte Fluid in der Abgasventildruckkammer (76) gehalten wird, wobei das Abgassitzventil (80) eingerichtet ist, um den Auslassflussdurchlass von dem Abgasanschluss (32) in der geschlossenen Position des Abgassitzventils zu isolieren.

6. Proportionaldrucksteuergerät (10), wie es in Anspruch 5 beansprucht ist, welches weiterhin eine Trennwand (45) beinhaltet, die zwischen dem Kolben (44) und dem Einlasssitzventil (36) positioniert ist und mindestens eine Öffnung (47) hat, die Fluidfluss durch die Trennwand (45) ermöglicht.

7. Proportionaldrucksteuergerät (10), wie es in Anspruch 5 oder 6 beansprucht ist, wobei das Einlasssitzventil (36) beinhaltet: einen Ventilhohlraum (50), der ein Vorspannteil (40) aufnimmt, das betrieben wird, um das Einlasssitzventil (36) in einer geschlossenen Richtung des Einlassventils normal vorzuspannen, und einen Sitzring (46), der eingerichtet ist, um mit einem Ventilsitz dichtend in Kontakt zu stehen.

8. Proportionaldrucksteuergerät (10), wie es in einem der Ansprüche 5-7 beansprucht ist, wobei das Einlasssitzventil in die geöffnete Position des Einlasssitzventils beweglich ist, wenn das mit Druck beaufschlagte Fluid durch den Aufnahmedurchlass (66) zu der Kolbenkammer (68) geleitet ist, wobei das mit Druck beaufschlagte Fluid auf ein Kolbenoberflächengebiet (70) wirkt, welches größer als ein Oberflächengebiet des Einlasssitzventils (36), was eine Kraft erzeugt, die wirkt, um den Kolben (44), der das Einlasssitzventil (36) drückt, in die geöffnete Position des Einlasssitzventils zu bewegen.

9. Proportionaldrucksteuergerät (10), wie es in einem der Ansprüche 5-8 beansprucht ist, wobei das Einlasssitzventil (36) einen Schaft (43) beinhaltet, der sich von dem Einlasssitzventil (36) in axialer Richtung erstreckt, der eingerichtet ist, um mit dem Kolben (44) in Kontakt zu stehen, wobei Mit-Druck-Beaufschlagen der Kolbenkammer Bewegung des Kolbens, der den Schaft (43) kontaktiert, induziert, um Rutschbewegung des Einlasssitzventils (36) in die geöffnete Position des Einlasssitzventils zu induzieren.

10. Proportionaldrucksteuergerät (10), wie es in Anspruch 1 beansprucht ist, wobei das Einlasssitzventil (36) verrutschbar in einer Druckkammer angeordnet ist, wobei die Druckkammer in Fluidverbindung mit dem Auslassflussdurchlass (34) über eine Öffnung (112) steht, die dimensioniert ist, um eine Betriebsgeschwindigkeit des Einlasssitzventils zu steuern.

11. Proportionaldrucksteuergerät (10), wie es in Anspruch 2 beansprucht ist, wobei:
das Steuergerät Einlass- (24), Abgas- (26) und Zentralgehäuse(22)-Abschnitte beinhaltet, wobei die Einlass- und Abgasgehäuseabschnitte lösbar und dichtend mit dem Zentralkörperabschnitt verbunden sind;
wobei die Einlass-, Auslass- und Abgasanschlüsse in dem Zentralkörperabschnitt erzeugt sind;
wobei der Zentralkörperabschnitt das Einlassventil (36) und das Auslassventil (80) aufnimmt;
wobei das Einlasssitzventil (36) und der Kolben (44) verrutschbar in dem Einlasskörperabschnitt (24) angeordnet sind und das Abgassitzventil (80) in dem Abgasgehäuseabschnitt (26) verrutschbar angeordnet ist.

12. Proportionaldrucksteuergerät (10), wie es in Anspruch 2 beansprucht ist, wobei das Befüllungsventil (54), das in Verbindung mit dem Befüllungseinlassdurchlass (62) steht, betrieben wird, um das mit Druck beaufschlagte Fluid von dem Einlass- (36) und Auslasssitzventil (80) zu isolieren, wenn das Befüllungsventil in einer geschlossenen Position ist, und wenn es geöffnet ist, Fluss des mit Druck beaufschlagten Fluids ermöglicht, um auf eine Endfläche des Kolbens und eine Abgasventilendfläche zu wirken.

13. Proportionaldrucksteuergerät (10), wie es in Anspruch 12 beansprucht ist, wobei:
das Gleitschutzventil (56), wenn es geöffnet ist, einen Druck des mit Druck beaufschlagten Fluids, der auf die Kolbenendfläche (70) und die Abgasventilendfläche (78) wirkt, reduziert; und
das Gleitschutzventil (56) und das Befüllungsventil (54) jeweils ein Solenoid-betätigtes Ventil umfassen.

14. Proportionaldrucksteuergerät (10), wie es in einem der voranstehenden Ansprüche beansprucht ist, das weiterhin beinhaltet:
ein Steuersystem, das eingerichtet ist, um das sensierte Drucksignal von der ersten Drucksignalgebervorrichtung (110) zu empfangen und das Befüllungsventil (54) und das Gleitschutzventil (56) zu steuern; und
eine zweite Drucksignalgebervorrichtung (126), die in einem Auslassflussdurchlass (34) von dem Auslassanschluss (30) positioniert ist, die eingerichtet ist, um ein zweites zensiertes Drucksignal auszugeben, das durch das Steuersystem empfangen wird, um Steuerung des Befüllungsventils (54) und des Gleitschutzventils (56) anzupassen.

15. Proportionaldrucksteuergerät (10), wie es in einem der voranstehenden Ansprüche beansprucht ist, wobei das Befüllungsventils (54) und das Gleitschutzventil (56) luftbetätigte Befüllungs- und Gleitschutzventile sind, wobei das Befüllungsventil in Verbindung mit dem Befüllungsventileinlassdurchlass (62) steht.

## Revendications

1. Régulateur de pression proportionnel (10) comprenant :
un ensemble régulateur comportant :
un corps ayant des ports d'entrée (28), de sortie (30) et d'échappement (32) ;
une soupape de remplissage (54) en communication avec un fluide sous pression dans le port d'entrée ;
une soupape de vidange (56) en communication avec le fluide sous pression dans un passage de décharge de la soupape de remplissage ;
une soupape à champignon d'entrée (36) et une soupape à champignon d'échappement (80) ;
un passage d'écoulement de sortie (34) en communication avec le fluide sous pression lorsque la soupape à champignon d'entrée (36) est déplacée vers une position ouverte de soupape à champignon d'entrée, le passage d'écoulement de sortie (34) communiquant avec le port de sortie (30) et un passage commun d'échappement/de sortie (86) normalement isolé du port d'échappement lorsque la soupape à champignon d'échappement est dans une position fermée de soupape à champignon d'échappement ; i et
un passage d'entrée de remplissage (62) fournissant une communication fluidique entre un passage d'écoulement d'entrée (58) et la soupape de remplissage (54), et isolé de chacun du passage d'écoulement de sortie (34), du passage commun d'échappement/de sortie (86), et les ports de sortie et d'échappement dans tous les états de fonctionnement du régulateur, le passage d'entrée de remplissage (62) communiquant avec le passage d'entrée (58) et étant mis sous pression de manière continue par le fluide sous pression dans le passage d'entrée ; et **caractérisé en ce qu'**il comporte un premier dispositif de signalisation de pression (110) adapté pour délivrer en sortie un signal de pression détectée positionné dans le passage de décharge en aval de la soupape de remplissage (54) pour isoler le dispositif de signalisation de pression du fluide dans le port de sortie.

2. Régulateur de pression proportionnel (10) tel que revendiqué dans la revendication 1, comportant en outre :
un piston (44) en communication fluidique avec la soupape de remplissage (54) et adapté pour déplacer la soupape à champignon d'entrée (36) d'une position fermée à la position ouverte de soupape à champignon d'entrée ;
une chambre (68) en amont du piston, et
un passage de décharge de soupape (64) en communication avec le fluide sous pression provenant de la soupape de remplissage (54) fournissant le fluide sous pression à chacune de la chambre en amont du piston et de la chambre (76) de mise sous pression de soupape d'échappement (80), le passage de décharge de soupape (64) est isolé de chacun du passage d'écoulement de sortie (34), du passage commun d'échappement/de sortie (86), et du port de sortie (30) dans tous les états de fonctionnement du régulateur.

3. Régulateur de pression proportionnel (10) tel que revendiqué dans la revendication 1 ou 2, dans lequel la soupape à champignon d'entrée (36) est disposée en coulissement dans le corps et est normalement sollicitée vers une position fermée de soupape à champignon d'entrée définissant un état fermé du régulateur, la soupape à champignon d'entrée (36) pouvant se déplacer vers la position ouverte de soupape à champignon d'entrée (36) par le fluide sous pression dirigé à travers la soupape de remplissage (54) résultant de l'ouverture de soupape de remplissage, définissant un état ouvert du régulateur ; et où la soupape à champignon d'échappement (80) est disposée de manière en coulissement dans le corps et est maintenue dans la position fermée de soupape à champignon d'échappement (80) par la pression de fluide dirigé à travers la soupape de remplissage (54), la soupape à champignon d'échappement (80) isolant le fluide sous pression du port d'échappement (32).

4. Régulateur de pression proportionnel (10) tel que revendiqué dans l'une des revendications précédentes, dans lequel lorsque la soupape de remplissage (54) est fermée et la soupape de vidange (56) est ouverte, un passage de sortie de soupape de vidange (98) en communication fluidique avec le port d'échappement (32) permet de réduire la pression du passage de décharge de soupape (64) via le port d'échappement et permet à la soupape d'échappement (80) de s'ouvrir, évacuant l'air du passage d'écoulement de sortie (34) et du passage commun d'échappement/de sortie (86) via le port d'échappement.

5. Régulateur de pression proportionnel (10) tel que revendiqué dans la revendication 1 comportant en outre :
un piston (44) disposé en coulissement dans le corps ;
un passage de réception (92) isolé de tout élément parmi les passages d'écoulement d'entrée et de sortie et les ports d'entrée (28), de sortie (30), et d'échappement (32) dans chacun d'un état ouvert, d'un état fermé, et d'un état de fonctionnement d'échappement du régulateur, le passage de réception (92) se reliant de manière fluidique à une chambre en amont du piston et à une chambre de mise sous pression de soupape d'échappement (76) ;
la soupape à champignon d'entrée (36) étant adaptée pour isoler le passage d'écoulement de sortie (34) du passage d'écoulement d'entrée (58) dans une position fermée de soupape à champignon d'entrée, la soupape à champignon d'entrée (36) étant normalement sollicitée vers la position fermée de soupape à champignon d'entrée ; et
la soupape à champignon d'échappement (80) étant normalement maintenue dans une position fermée de soupape à champignon d'échappement par le fluide sous pression dans la chambre de mise sous pression de soupape d'échappement (76), la soupape à champignon d'échappement (80) étant adaptée pour isoler le passage d'écoulement de sortie du port d'échappement (32) dans la position fermée de soupape à champignon d'échappement.

6. Régulateur de pression proportionnel (10) tel que revendiqué dans la revendication 5, comportant en outre une paroi de délimitation (45) positionnée entre le piston (44) et la soupape à champignon d'entrée (35) ayant au moins une ouverture (47) permettant l'écoulement de fluide à travers la paroi de délimitation (45).

7. Régulateur de pression proportionnel (10) tel que revendiqué dans la revendication 5 ou 6, dans lequel la soupape à champignon d'entrée (36) comporte :
une cavité de soupape (50) recevant un élément de sollicitation (40) fonctionnant pour solliciter normalement la soupape à champignon d'entrée (36) dans une direction fermée de soupape d'entrée ; et
une bague de siège (46) adaptée pour entrer en contact étanche avec un siège de soupape.

8. Régulateur de pression proportionnel (10) tel que revendiqué dans l'une des revendications 5 à 7, dans lequel la soupape à champignon d'entrée peut se déplacer vers la position ouverte de soupape à champignon d'entrée lorsque le fluide sous pression est dirigé à travers le passage de réception (66) vers la chambre de piston (68), le fluide sous pression agissant sur une superficie de piston (70) qui est plus grande qu'une superficie de soupape à champignon d'entrée (36) créant une force faisant déplacer le piston (44) qui pousse la soupape à champignon d'entrée (36) vers la position ouverte de soupape à champignon d'entrée.

9. Régulateur de pression proportionnel (10) tel que revendiqué dans l'une des revendications 5 à 8, dans lequel la soupape à champignon d'entrée (36) comporte une tige (43) s'étendant axialement à partir de la soupape à champignon d'entrée (36) adaptée pour entrer en contact avec le piston (44), où la mise sous pression de la chambre de piston entraîne un mouvement du piston entrant en contact avec la tige (43) pour entraîner un mouvement de coulissement de la soupape à champignon d'entrée (36) vers la position ouverte de soupape à champignon d'entrée.

10. Régulateur de pression proportionnel (10) tel que revendiqué dans la revendication 1, dans lequel la soupape à champignon d'entrée (36) est disposée en coulissement dans une chambre de pression, la chambre de pression étant en communication fluidique avec le passage d'écoulement de sortie (34) via un orifice (112) dimensionné pour réguler une vitesse de fonctionnement de la soupape à champignon d'entrée.

11. Régulateur de pression proportionnel (10) tel que revendiqué dans la revendication 2, dans lequel :
le régulateur comporte des parties de corps d'entrée (24), d'échappement (26), et centrale (22), les parties de corps d'entrée et d'échappement étant reliées de manière amovible et étanche à la partie de corps centrale ;
les ports d'entrée, de sortie, et d'échappement sont créés dans la partie de corps centrale ;
la partie de corps centrale reçoit la soupape d'entrée (36) et la soupape d'échappement (80) ;
la soupape à champignon d'entrée (36) et le piston (44) sont disposés en coulissement dans la partie de corps d'entrée (24) et
la soupape à champignon d'échappement (80) est disposée en coulissement dans la partie de corps d'échappement (26).

12. Régulateur de pression proportionnel (10) tel que revendiqué dans la revendication 2, dans lequel la soupape de remplissage (54) en communication avec le passage d'entrée de remplissage (62) fonctionne pour isoler le fluide sous pression des soupapes à champignon d'entrée (36) et d'échappement (80) lorsque la soupape de remplissage est dans une position fermée, et lorsqu'elle est ouverte, elle permet l'écoulement du fluide sous pression pour agir sur une face d'extrémité du piston et une face d'extrémité de soupape d'échappement.

13. Régulateur de pression proportionnel (10) tel que revendiqué dans la revendication 12, dans lequel :
la soupape de vidange (56), lorsqu'elle ouverte, diminue une pression du fluide sous pression agissant sur la face d'extrémité de piston (70) et la face d'extrémité de soupape d'échappement (78) ; et
la soupape de vidange (56) et la soupape de remplissage (54) comprennent chacune une soupape à commande par solénoïde.

14. Régulateur de pression proportionnel (10) tel que revendiqué dans l'une des revendications précédentes, comportant en outre :
un système de régulation adapté pour recevoir le signal de pression détectée à partir du premier dispositif de signalisation de pression (110) et pour réguler les soupapes de remplissage (54) et de vidange (56) ; et
un deuxième dispositif de signalisation de pression (126) positionné dans un passage d'écoulement de sortie (34) à partir du port de sortie (30) adapté pour délivrer en sortie un deuxième signal de pression détectée reçu par le système de régulation pour affiner la régulation des soupapes de remplissage (54) et de vidange (56).

15. Régulateur de pression proportionnel (10) tel que revendiqué dans l'une des revendications précédentes, dans lequel les soupapes de remplissage (54) et de vidange (56) sont des soupapes de remplissage et de vidange à commande pneumatique ayant la soupape de remplissage en communication avec le passage d'entrée de soupape de remplissage (62).
